# FASCICULE DE BREVET EUROPEEN

(11) **EP 3 011 615 B1**
(45) Date de publication et mention de la délivrance du brevet: **01.04.2020**
(21) Numéro de dépôt: 14814630.1
(22) Date de dépôt: 20.06.2014
(51) Int. Cl.: H01M 4/136, H01M 4/1397, H01M 4/36, H01M 4/38, H01M 4/58, H01M 4/587, H01M 4/66, H01M 10/056, H01M 10/0562, H01M 10/058

(54) **CELLULES ÉLECTROCHIMIQUES LITHIUM-SOUFRE D'ÉTAT TOUT SOLIDE ET LEURS MÉTHODES DE FABRICATION**
FESTKÖRPER-LITHIUM-SCHWEFEL-BATTERIEZELLEN UND HERSTELLUNGSVERFAHREN DAFÜR
ALL-SOLID-STATE LITHIUM-SULPHUR ELECTROCHEMICAL CELLS AND PRODUCTION METHODS THEREOF

(30) Priorité: 21.06.2013 CA 2820635
(43) Date de publication de la demande: 27.04.2016
(73) Titulaire: Hydro-Québec, Montréal QC H2Z 1A4 (CA)
(72) Inventeur: ZAGHIB, Karim, Longueuil, Québec J4N 1T8 (CA); KIM, Chisu, Longueuil, Québec J4G 2L8 (CA); GUERFI, Abdelbast, Brossard, Québec J4X 1W2 (CA); BARRAY, Francis, St-Simon de Bagot, Québec J0H 1Y0 (CA); GAGNON, Catherine, Contrecoeur, Québec J0L 1C0 (CA); TROTTIER, Julie, Mirabel, Québec J7J 1H4 (CA)
(74) Mandataire: Lang, Johannes
(86) Numéro de dépôt international: PCT/CA2014/050584
(87) Numéro de publication internationale: WO 2014/201568

(56) Documents cités:
- WO-A1-97/44840
- CA-A1- 2 514 783
- KR-A- 20030 092 662
- US-A1- 2003 073 005
- US-A1- 2004 058 246
- US-A1- 2004 191 617
- US-A1- 2010 231 168
- US-A1- 2012 094 189
- US-A1- 2012 207 994
- US-A1- 2013 059 193
- US-B2- 7 745 048
- J. HASSOUN, B. SCROSATI: "Moving to a solid state configuration: a valid approach to making lithium-sulfur batteries viable for practical applications", ADVANCED MATERIALS, vol. 22, 14 septembre 2010 (2010-09-14), pages 5198-5201, XP002765764, DOI: 10.1002/adma.201002584
- ZHAO ET AL.: 'Polymer electrolytes for lithium/sulfur batteries Review' MEMBRANES 2012, pages 553 - 564
- YANG ET AL.: 'High-capacity micrometer-sized Li2S particles as cathode materials for advanced rechargeable lithium-ion batteries' J. AM. CHEM. SOC. vol. 134, no. 37, 2012, pages 15387 - 15394, XP055216686
- YANG ET AL.: 'Improving the Performance of Lithium-Sulfur Batteries by Conductive Polymer Coating' ACS NANO vol. 5, no. 11, 2011, pages 9187 - 9193, XP055187449
- KIM ET AL.: 'Facile dry synthesis of sulfur-LiFeP04 core-shell composite for the scalable fabrication of lithium/sulfur batteries' ELECTROCHEMISTRY COMMUNICATIONS vol. 32, Juillet 2013, pages 35 - 38, XP028531640

## Description

### DOMAINE DE L'INVENTION

L'invention se rapporte au domaine des cellules électrochimiques au lithium-soufre (Li-S) et à leur fabrication. Plus spécifiquement, l'invention se rapporte aux cellules électrochimiques, systèmes et éléments préfabriqués tout solides au Li-S et à leurs procédés de fabrication.

### CONTEXTE DE L'INVENTION

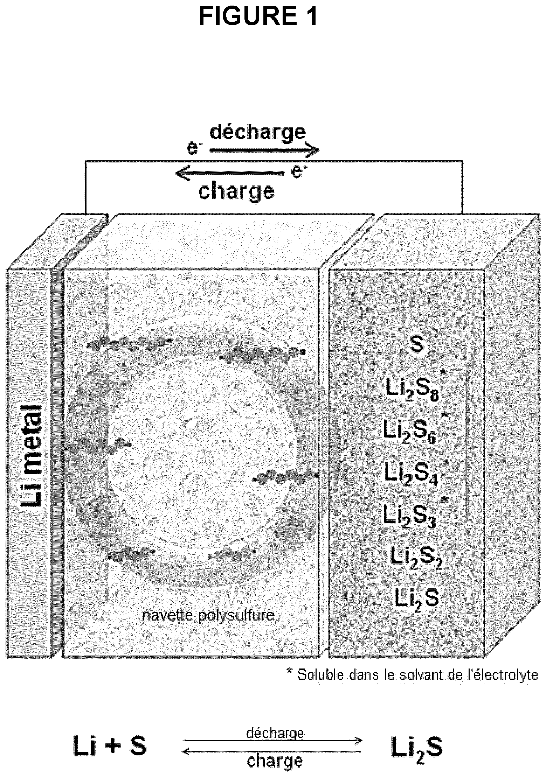

Un batterie Li-S comprend généralement une anode de lithium métallique (Li(m)), une cathode contenant du soufre (S₈) mélangé à du carbone (le soufre lui-même étant mauvais conducteur), et un électrolyte liquide. Durant la décharge, le lithium de l'anode est oxydé pour former des ions lithium et le soufre est réduit dans la cathode pour générer des espèces Li-polysulfure. Le principe des réactions en charge-décharge dans un électrolyte liquide conventionnel est illustré à la Figure 1.

L'énergie spécifique théorique des batteries lithium-soufre (Li-S) est d'environ 3 à 5 fois plus élevée (2567 Wh/kg) que pour les batteries Li-ion. Pour cette raison, et pour ses bénéfices économiques et environnementaux, la technologie des batteries Li-S est souvent référée comme étant l'une des technologies de remplacement du Li-ion des plus prometteuses. Cependant, plusieurs inconvénients ont repoussé son entrée sur le marché, incluant une endurance cyclique médiocre, une efficacité cyclique basse, et de sévères problèmes d'autodécharge et une sécurité discutable. Ceci serait dû aux espèces polysulfures de lithium qui sont, au moins en partie, soluble dans l'électrolyte, et, plus fondamentalement, à la nature isolante du soufre et du sulfure de lithium, limitant l'utilisation de ce matériau actif (voir Zhang S. S. et al, 2013, J. Power. Sources, 231, pp 153-162).

La plupart des efforts d'amélioration de la technologie des batteries Li-S ont été concentrés sur les modifications du composite contenant le soufre (afin de trapper le soufre à l'intérieur de la cathode, X. Ji et al, 2010, J. Mat. Chem., 20, pp 9821-9826). Cependant, la plupart des méthodes proposées impliquent des étapes qui sont moins applicables à la production sur une échelle industrielle plus grande et/ou impliquent des coûts de production plus élevés.

Certains groupes de recherche ont développé des systèmes comprenant un électrolyte polymère, par exemple utilisant des homopolymères PEO, dans le but de retarder la solubilité des ions polysulfure, mais la performance de la cellule démontre une dégradation instantanée après la décharge initiale (S.S. Jeong et al., 2007, Journal of Power Sources 174, pp 745-750).

Une batterie Li-S toute-solide a été décrite dans Nagao et al, 2013, J. Power. Sources, 222, pp 237-242. Ce système inclut une cathode de composite mésoporeux, une anode d'alliage Li-AI et un électrolyte solide de thio-LISICON (Li_{3.25}Ge_{0.25}P_{0.75}S₄). Malgré la capacité extraordinairement élevée, la cellule démontre un voltage faible de décharge et une performance limitée de puissance inférieure à 0.1C à la température de la pièce.

WO97/44840 décrit une électrode positive comprenant un collecteur de courant, un liant, un matériau conducteur, et un matériau actif comprenant du soufre enrobé dans une couche de chalcogénures de métaux de transition.

J. Hassoun, B. Scrosati, Advanced Materials, vol. 22, pages 5198-5201, décrit un électrolyte solide comprenant du PEO, un sel de lithium, et des nanoparticules de ZrO2 dispersées; cet électrolyte est assemblé dans une batterie avec une anode de lithium métallique et une cathode comprenant du soufre enrobé de carbone, un carbone conducteur et un liant.

Il existe un besoin pour des cellules électrochimiques Li-S industriellement applicables, possédant au moins un de ces avantages: endurance cyclique améliorée, meilleure efficacité cyclique, autodécharge plus basse, sécurité améliorée, et/ou des coûts de production plus bas lorsque comparées aux autres alternatives de batteries Li-S.

### RÉSUMÉ DE L'INVENTION

Selon un aspect, l'invention porte sur une cellule électrochimique selon la revendication 1.

Le film d'électrolyte solide est un film conducteur d'ion et comprend aussi au moins un composé inorganique dans la couche polymérique ou séparément dans une couche solide conductrice d'ion.

Le polymère de l'électrolyte consiste en un copolymère séquencé composé d'au moins un segment de solvatation d'ions lithium et d'au moins un segment réticulable. Préférablement, le segment de solvatation d'ions lithium est sélectionné parmi les homo- ou copolymères ayant des unités répétitives de Formule (I): 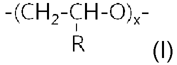 dans lequel,
- R: est choisi parmi H, C₁-C₁₀ alkyl, ou -(CH₂-O-R^{a}R^{b});
- R^{a}: est (CH₂-CH₂-O)_{y};
- R^{b}: est choisi parmi H et un groupe C₁-C₁₀ alkyl;
- x: est un nombre entier choisi dans l'intervalle de 10 à 200,000; et
- y: est un nombre choisi dans l'intervalle de 0 à 10.

Le segment réticulable du polymère est un segment de polymère comprenant au moins un groupement fonctionnel réticulable de façon multidimensionnelle par irradiation ou traitement thermique. L'électrolyte solide peut aussi comprendre au moins un sel de lithium dissout dans le solide conducteur d'ion, de préférence, le sel de lithium est de formule Li⁺X⁻, où X⁻ est un anion ayant une charge délocalisée, de préférence un anion choisi parmi PF₆⁻, BF₄⁻, AsF₆⁻, ClO₄⁻, CF₃SO₃⁻, (CF₃SO₂)₂N⁻ (TFSI), et (C₂F₅SO₂)₂N⁻(BETI).

Dans un autre mode de réalisation, le composé inorganique de l'électrolyte solide est choisi parmi SiO₂, Al₂O₃, TiO₂, et d'autres solides conducteurs d'ions lithium, et leurs combinaisons, dans lequel the solide conducteur d'ions lithium peut être choisi parmi les céramiques ou verres conducteurs d'ions lithium, tels que NASICON, LISICON, thio-LISICON, Garnet, de forme cristalline ou amorphe, et leurs combinaisons. La céramique ou le verre conducteur d'ions lithium a de préférence une conductivité en ions lithium d'au moins 10⁻⁴ S/cm à 25°C. Le film conducteur d'ions a une épais seur entre 10 et 200 µm, entre 10 et 100 µm, ou entre 20 et 50 µm.

Selon un autre aspect, l'invention porte sur une électrode positive comprenant un liant polymère. De préférence, le liant polymère est un copolymère séquencé composé d'au moins un segment de solvatation d'ions lithium et d'au moins un segment réticulable, dans lequel le segment de solvatation d'ions lithium est sélectionné parmi les homo- ou copolymères ayant des unités répétitives de Formule (I) telle que définie plus haut. Dans un mode de réalisation, le liant polymère de l'électrode positive est le même que le polymère de l'électrolyte. Dans un autre mode de réalisation, le liant polymère de l'électrode positive est différent du polymère de l'électrolyte.

L'électrode positive comprend un matériau composite incluant des particules de soufre élémentaire encapsulées dans un matériau d'enrobage, optionnellement préparé par mécanofusion. De préférence, le matériau d'enrobage comprend un matériau inorganique choisi parmi:
- LiₐM¹_{b}(XO₄), dans lequel 0 ≤a ≤ 2, 0< b ≤ 1; M¹ est choisi parmi Fe, Mn, Co, Ni, et Ti, ou leurs combinaisons, X est choisi parmi P, Si et S, tels que LiFePO₄, LiNiPO₄, LiMnPO₄, LiCoPO₄, ou LiFe₁₋ₓTiₓPO₄, où 0 < x < 1; ou
- Li_{c}M²_{d}Zₑ, dans lequel 0 ≤ c ≤ 4, 0 < d ≤ 5, 0 < e ≤ 12; M² est choisi parmi Mo, V, Ti, Al, et Si; et Z est choisi parmi O, S, et Se, tels que TiO₂, TiS₂, V₂O₅, LiV₃O₈, Li₄Ti₅O₁₂, MoS₂, MoO₂, SiO₂, ou Al₂O₃.

De façon optionnelle, le matériau inorganique est sous forme de particules, éventuellement enrobées de carbone. Dans un autre mode de réalisation, le film d'électrode positive comprend aussi un carbone conducteur, comme par exemple, une poudre ou des fibres de carbone choisi parmi le noir de carbone, le charbon activé, le graphite, le graphène, et leurs mélanges. De préférence, le carbone conducteur possède une surface spécifique d'au moins 5 m²/g, ou au moins 50 m²/g. Dans un autre mode de réalisation, carbone conducteur possède une surface spécifique d'au moins 500 m²/g.

Selon un autre mode de réalisation de l'invention, le film d'électrode négative de la cellule électrochimique comprend une feuille de lithium métallique, ou un alliage de lithium métallique, ledit alliage comprenant au moins 90% de lithium par poids. Dans un mode de réalisation, la surface du matériau électrochimiquement actif du film d'électrode négative inclut une couche de passivation formée *in situ.* Dans un autre mode de réalisation, le film d'électrode négative comprend, en outre, une couche protectrice comprenant, par exemple, un lubrifiant tel qu'une huile synthétique, où l'huile synthétique peut être le produit d'estérification d'un acide gras et d'un polyéthylène glycol. Dans un autre mode de réalisation, le matériau électrochimiquement actif de l'électrode négative est un film ayant une épaisseur entre environ 5 µm et environ 200 µm.

Dans un autre mode de réalisation, la cellule électrochimique de l'invention comprend en outre une couche isolante adjacente à l'électrode négative. Dans un autre mode de réalisation, l'électrode positive de la cellule électrochimique de l'invention comprend, en outre, un collecteur de courant agissant aussi comme support pour le matériau électrochimiquement actif de l'électrode positive, ledit matériau électrochimiquement actif étant adjacent à l'électrolyte solide. De préférence, le collecteur de courant est une feuille d'aluminium, par exemple, ayant une épaisseur située entre environ 10 µm et environ 30 µm, incluant éventuellement une couche de carbone.

Un procédé de fabrication d'une cellule électrochimique selon l'invention comprend les étapes de:
a) se procurer un film d'électrode positive, un film d'électrolyte, et un film d'électrode négative tels que décrits dans le présent document; et
b) empiler et laminer ensemble le film d'électrode positive, le film d'électrolyte, et le film d'électrode négative.

Dans un mode de réalisation, l'étape de mise à disposition du film d'électrode négative comprend une étape de laminage d'une feuille de lithium entre au moins deux rouleaux et, optionnellement, d'enrobage de la surface du film d'une couche de protection.

Dans un autre mode de réalisation, l'étape de mise à disposition du flim d'électrode positive comprend des étapes de mélange du matériau électrochimiquement actif de l'électrode positive avec un carbone conducteur, des précurseurs polymères, optionnellement un sel de lithium, un composé inorganique et/ou un solvant, d'épandage du mélange obtenu sur un collecteur de courant, évaporation du solvant (si nécessaire) et de polymérisation, tel que par irradiation UV ou chauffage, pour former le film d'électrode positive.

Dans une autre mode de réalisation, l'étape de mise à disposition du film d'électrolyte comprend les étapes de mélange de précurseurs de polymère, de sel de lithium, de composé(s) inorganique(s), et optionnellement d'un solvant, afin d'ajuster la viscosité, de coulage du mélange ainsi obtenu sur un substrat, évaporation du solvant (si nécessaire) et de polymérisation, tel que par irradiation UV ou chauffage, pour former le film d'électrolyte solide.

Dans un autre mode de réalisation, l'étape de mise à disposition du film d'électrolyte comprend les étapes de (a) mélange de précurseurs de polymère, de sel(s) de lithium, de composé(s) inorganique(s), et optionnellement de solvant(s), afin d'ajuster la viscosité, coulage du mélange ainsi obtenu sur un substrat, évaporation du solvant (si nécessaire) et polymérisation, tel que par irradiation UV ou chauffage, pour former un film polymère-composé inorganique; et (b) mélange de précurseurs de polymère, de sel(s) de lithium, et optionnellement de solvant(s), afin d'ajuster la viscosité, coulage du mélange ainsi obtenu sur le film polymère-composé inorganique, évaporation du solvant (si nécessaire) et polymérisation, tel que par irradiation UV ou chauffage, pour former le film d'électrolyte solide.

Dans une autre mode de réalisation, l'étape d'empilage et de laminage des films d'électrode positive, d'électrolyte, et d'électrode négative comprend, en outre, des étapes de laminage du film d'électrode positive avec le film d'électrolyte et de laminage subséquent du film d'électrode négative sur celui-ci.

Dans un autre mode de réalisation de l'invention, la cellule électrochimique comprend un composant multicouche qui peut être roulé ou plié. Dans un autre mode de réalisation, la cellule électrochimique comprend deux composants multicouches ou plus empilés.

L'invention envisage aussi un élément électrolyte-électrode positive selon la revendication 19.

Dans une autre mode de réalisation, l'invention porte sur un procédé de préparation d'un élément électrolyte-électrode positive préfabriqué de l'invention, comprenant les étapes de: a) mélange du matériau électrochimiquement actif de l'électrode positive avec du carbone conducteur, des précurseurs de polymère, optionnellement des sel(s) de lithium, composé(é) inorganique(s) et/ou solvant(s); b) épandage du mélange obtenu à l'étape (a) sur un collecteur de courant, évaporation du solvant (si présent) et polymérisation pour former le film d'électrode positive; c) mélange de précurseurs de polymère, de sel(s) de lithium et de composé(s) inorganiques, optionnellement dans un(des) solvant(s) et épandage sur un substrat pour former un précurseur de film d'électrolyte; d) irradiation ou chauffage du précurseur de film d'électrolyte de l'étape (c) pour former film d'électrolyte solide; et e) empilage et laminage du film d'électrode positive de l'étape (b) avec le film d'électrolyte solide de l'étape (d). Le procédé peut aussi inclure une étape de retrait du substrat avant ou après l'étape (e).

Dans un autre mode de réalisation, le procédé de préparation d'un élément électrolyte-électrode positive préfabriqué de l'invention, comprend les étapes de: a) mélange du matériau électrochimiquement actif de l'électrode positive avec du carbone conducteur, des précurseurs de polymère, optionnellement des sel(s) de lithium, composé(s) inorganique(s) et/ou un solvant(s); b) épandage du mélange obtenu à l'étape (a) sur un collecteur de courant, évaporation du solvant (si présent) et polymérisation pour former le film d'électrode positive; c) mélange de précurseurs de polymère, sel(s) de lithium et de composé(s) inorganique(s), optionnellement dans un(des) solvant(s), et épandage sur la surface opposée au collecteur de courant du film d'électrode positive de l'étape (b) afin de produire une électrode positive enrobée; d) irradiation ou chauffage de l'électrode positive enrobée obtenue à l'étape (c) pour former un élément électrolyte-électrode positive; et e) laminage optionnel de la composition obtenue à l'étape (d).

Dans encore un autre mode de réalisation, l'invention porte sur des systèmes comprenant une cellule électrochimique, une électrode positive, ou un élément électrolyte-électrode positive préfabriqué selon l'invention, et l'utilisation d'un élément électrolyte-électrode positive préfabriqué ou d'une électrode positive dans la fabrication d'une cellule électrochimique selon l'invention. L'invention envisage aussi l'utilisation des cellules électrochimiques de l'invention en remplacement des batteries lithium-ion et dans des systèmes demandant des batteries rechargeables de haute énergie, et plus particulièrement dans des systèmes tels que dans les véhicules électriques et les appareils d'informatique ubiquitaire.

### BRÈVE DESCRIPTION DES DESSINS

La Figure 1 illustre le principe général des batteries lithium-soufre dans un système conventionnel à électrolyte liquide.
La Figure 2 illustre des exemples de configurations de l'électrolyte solide à l'intérieur de la cellule électrochimique de l'invention.

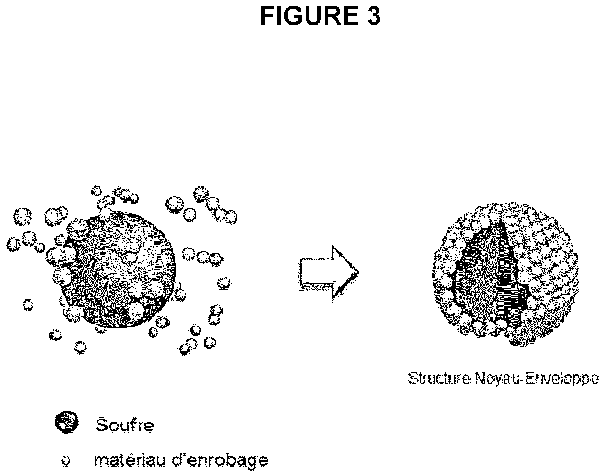

La Figure 3 illustre schématiquement le matériau composite de soufre caractérisé par une particule interne de soufre encapsulée dans un enrobage extérieur.
La Figure 4 montre une image SEM du composite soufre-LiFePO₄, où les particules de soufre sont encapsulées dans une couche de LiFePO₄.
La Figure 5 montre les profils de première décharge et charge testés à 0.1C (167 mA/g) comparant les résultats obtenus avec la cellule électrochimique préparée à l'Exemple 2 et la cellule électrochimique obtenu à l'Exemple 1 (Comparatif).
La Figure 6 montre les profils de troisième décharge et charge de la cellule illustrée à l'Exemple 3 en comparaison de ceux de la cellule de l'Exemple 1 (Comparatif).
La Figure 7 montre la performance de cyclage des cellules préparées dans les Exemples 3 et 4 respectivement.
La Figure 8 montre le résumé de la capacité initiale et de l'efficacité coulombique des cellules préparées aux Exemples 1 (Comparatif), 2 à 4, 6, 7, 9 à 12, 14, 17 et 18 (Comparatif).

### DESCRIPTION DÉTAILLÉE

La description détaillée et les exemples qui suivent sont à titre d'illustration et ne doivent pas être interprétés comme limitant davantage la portée de l'invention.

La cellule électrochimique Li-S de l'invention ne contient pas d'électrolyte liquide, gel, ou céramique seulement. De façon générale, la cellule électrochimique comprend au moins un composant multicouche comprenant un film d'électrode négative contenant du lithium, un film d'électrode positive contenant du souffre sur un collecteur de courant, l'électrode négative et l'électrode positive étant séparées par un film d'électrolyte solide comprenant au moins une couche, ladite couche contenant un polymère.

De préférence, un composant multicouche de la cellule électrochimique a une épaisseur totale d'environ 10 µm à environ 1000 µm, de préférence d'environ 100 µm à environ 500 µm. Une cellule électrochimique comprend, par exemple, de 1 à 100 composant(s) multicouche(s), dépendamment de la configuration de la batterie. Par exemple, une cellule électrochimique peut être composée d'un composant multicouche, qui peut être roulé ou plié. Comme autre exemple, la cellule électrochimique peut être composée de 2 composants multicouches ou plus, qui peuvent être empilés.

Le polymère utilisé dans l'électrolyte de cette cellule électrochimique Li-S inclut un polymère conducteur d'ions auquel des additifs sont ajoutés avant polymérisation (par exemple, par chauffage ou irradiation). L'utilisation de polymères réticulés procure en outre, des propriétés améliorées de conduction. L'addition de matériau inorganique à l'électrolyte solide, soit sous forme de nano-particules ou de feuille de céramique, améliore la résistance mécanique du film d'électrolyte et améliore la réversibilité de l'électrode de lithium métallique. Ces particules inorganiques sont incluses dans la couche polymérique ou dans une couche séparée de l'électrolyte.

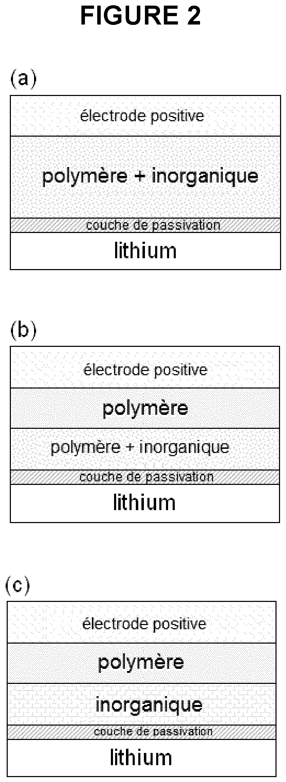

La Figure 2 illustre des exemples de cellule électrochimique ayant différentes configurations d'électrolyte solide selon l'invention, où l'électrode négative contenant du lithium inclut aussi une couche de passivation.

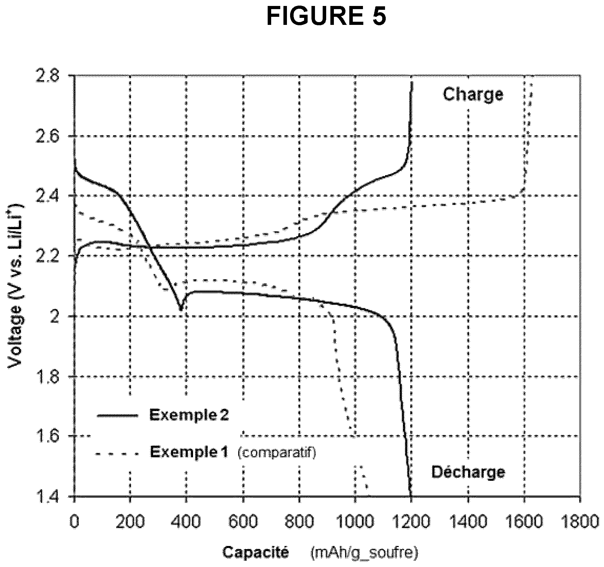

En raison de la solubilité limitée et donc de la mobilité limitée des ions polysulfure dans le système électrochimique de l'invention, la cellule démontre une efficacité coulombique significativement améliorée, plus de 90% sans (ou avec très peu de) réaction de navette des polysulfures, tel que montré à la Figure 5.

Un autre aspect de l'invention concerne l'électrode positive telle que définie plus en détail ci-dessous. Cette électrode positive selon l'invention contient des particules de soufre élémentaire, un liant polymère conducteur d'ions et un additif de carbone conducteur. Les particules de soufre de l'électrode positive peuvent aussi être encapsulées dans un matériau inorganique conducteur avant l'application du liant. D'autres additifs, tels que des sels de lithium et des composés inorganiques comme des particules de verre et/ou de céramique, peuvent également être ajoutés à la composition d'électrode positive.

L'invention envisage aussi des éléments électrolyte-électrode positive préfabriqués, ainsi que leur préparation et utilisation dans la fabrication de cellules électrochimiques. Ces unités électrolyte-électrode positive préfabriquées comprennent un film d'électrode positive et un film d'électrolyte solide, chacun étant tel que décrit dans le présent document.

Les cellules électrochimiques de l'invention conviennent aux utilisations où les batteries lithium-ion sont généralement utilisées et en remplacement de ces dernières, et dans des systèmes demandant des batteries rechargeables de haute énergie, et plus particulièrement dans des systèmes tels que les véhicules électriques et les appareils d'informatique ubiquitaire.

Suivent des exemples de la composition et des propriétés des composants de la cellule électrochimique selon l'invention.

### Électrolyte solide

L'électrolyte solide inclut un film conducteur d'ions comprenant au moins un sel de lithium et au moins un polymère conducteur d'ions. L'électrolyte solide peut inclure, en outre, un composé inorganique qui peut être présent dans le film polymère ou dans un film différent de l'électrolyte.

Le polymère consiste en un copolymère séquencé composé d'au moins un segment A de solvatation d'ions lithium et d'au moins un segment réticulable B. Le segment A est choisi parmi les homo- ou copolymères ayant des unités répétitives de Formule (I): 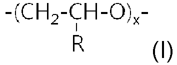 dans lequel,
- R: est choisi parmi H, C₁-C₁₀ alkyl, ou -(CH₂-O-R^{a}-R^{b});
- R^{a}: est (CH₂-CH₂-O)_{y};
- R^{b}: choisi parmi H ou un groupement C₁-C₁₀ alkyl;
- x: est un nombre entier choisi dans l'intervalle de 10 à 200,000; et
- y: est un nombre choisi dans l'intervalle de 0 à 10.

Le segment B est un segment polymère comprenant au moins un groupement fonctionnel réticulable de façon multidimensionnelle par irradiation ou traitement thermique.

Le sel de lithium est représenté par Li⁺X⁻, dans lequel X⁻ est un anion ayant une charge délocalisée, par exemple, un anion choisi parmi PF₆⁻, BF₄⁻, AsF₆⁻, ClO₄⁻, CF₃SO₃⁻, (CF₃SO₂)₂N⁻(TFSI), et (C₂F₅SO₂)₂N⁻(BETI).

Les composés inorganiques dans l'électrolyte solide sont, par exemple, choisis parmi SiO₂, Al₂O₃, TiO₂, et d'autres solides conducteurs d'ions lithium, tels que les céramiques ou verres conducteurs d'ions lithium comme, par exemple, NASICON, LISICON, thio-LISICON, Garnet, et leurs combinaisons, sous forme cristalline et/ou amorphe.

La structure de l'électrolyte solide de l'invention peut être constituée d'une seule couche ou de deux couches ou plus. Par exemple, l'électrolyte solide peut être choisi parmi les trois configurations différentes illustrées à la Figure 2, et résumées comme suit:
a) l'électrolyte solide comprend un film comprenant une couche polymère contenant des particules de composé inorganique;
b) l'électrolyte solide comprend deux films, un premier film tel que défini en (a), et un second film polymère sans composés inorganiques; ou
c) l'électrolyte solide comprend deux films, un premier film étant un film polymère, le second film comprenant des composés inorganiques sans polymère.

Dans l'option (c), le film polymère peut éventuellement aussi comprendre un composé inorganique. Le film d'électrolyte solide est fabriqué par coulage de la solution polymère ci-dessus mentionnée sur un substrat ou directement sur l'électrode positive suivi d'une réticulation par irradiation UV ou faisceau d'électron ou par traitement à la chaleur. L'épaisseur du film sec est, de préférence, contrôlée entre 10 µm et 100 µm, de préférence entre 20 µm et 50 µm. Le substrat est, par exemple, un film plastique qui peut être retiré avant le laminage du film d'électrolyte solide aux autres éléments de la cellule électrochimique.

### Électrode positive:

L'électrode positive de la cellule électrochimique de l'invention comprend au moins un matériau composite de soufre comprenant des particules de soufre élémentaire, au moins un additif de carbone conducteur, et au moins un liant polymère. Le matériau de l'électrode positive comprend optionnellement aussi au moins un sel de lithium et/ou composé inorganique.

Un matériau composite de soufre peut être caractérisé par des particules de soufre ayant une taille de particule entre 10 nm et 100 µm, de préférence entre 0.1 µm et 50 µm.

Le liant polymère est ajouté aux particules de soufre afin de former le film d'électrode positive. Le liant polymère est de préférence un polymère conducteur d'ions. Dans un mode préféré de réalisation, le liant polymère est un copolymère séquencé composé d'au moins un segment A de solvatation d'ions lithium et d'au moins un segment B réticulable, de préférence le segment A est tel que défini par la Formule I. Le liant polymère peut être le même ou différent du polymère présent dans l'électrolyte solide.

De plus, un additif de carbone conducteur peut être ajouté au liant polymère ce qui en augmente la conductivité. Des exemples d'additifs de carbone conducteur incluent les poudres ou fibres de carbone choisies parmi le noir de carbone, le charbon activé, le graphite, le graphène, et leurs mélanges. Par exemple, la surface spécifique du carbone sélectionné est plus grande que 5 m²/g, de façon optionnelle plus grande que 50 m²/g, ou plus grande que 500 m²/g.

Selon un aspect, les particules de soufre dans le liant polymère sont optionnellement encapsulées dans une couche d'enrobage externe, le matériau d'enrobage comprenant des particules d'un matériau inorganique, éventuellement enrobées de carbone, le matériau inorganique étant choisi parmi:
- LiₐM¹_{b}(XO₄), dans lequel 0 ≤a ≤ 2, 0< b ≤ 1, M¹ est choisi parmi Fe, Mn, Co, Ni, et Ti, ou une de leur combinaison, et X est choisi parmi P, Si, et S, par exemple, le matériau d'enrobage est choisi parmi LiFePO₄, LiNiPO₄, LiMnPO₄, LiCoPO₄, et LiFe₁₋ₓTiₓPO₄, où 0 < x < 1; ou
- Li_{c}M²_{d}Zₑ, dans lequel 0 ≤ c ≤ 4, 0 < d ≤ 5, 0 < e ≤ 12, M² est choisi parmi Mo, V, Ti, Al, et Si, et Z est choisi parmi O, S, et Se, par exemple, le matériau d'enrobage est TiO₂, TiS₂, V₂O₅, LiV₃O₈, Li₄Ti₅O₁₂, MoS₂, MoO₂, SiO₂, ou Al₂O₃.

Des exemples de matériaux inorganiques peuvent aussi être retrouvés, par exemple dans le brevet américain No. 5,910,382 (Goodenough et al), le sujet duquel est incorporé ici par référence dans son intégralité pour toutes les utilisations.

Un ou plusieurs sel(s) de lithium est(sont) optionnellement ajouté(s) au composite de l'électrode positive. Des exemples incluent les sels de lithium du PF₆⁻, BF₄⁻, AsF₆⁻, ClO₄⁻, CF₃SO₃⁻, (CF₃SO₂)₂N⁻ (TFSI), et (C₂F₅SO₂)₂N⁻ (BETI), et peuvent être identiques ou différents d'un sel présent dans l'électrolyte solide.

Des composés inorganiques sont aussi ajoutés au composite de l'électrode positive de façon optionnelle. Des exemples de composés inorganiques incluent SiO₂, Al₂O₃, TiO₂, et des solides conducteurs d'ions lithium tels que céramiques et verres conducteurs d'ions lithium, par exemple, NASICON, LISICON, thio-LISICON, Garnet, et leurs combinaisons, sous forme cristalline et/ou amorphe, et peuvent être identiques ou différente d'un composé inorganique présent dans l'électrolyte solide.

Le collecteur de courant de l'électrode positive est constitué de, par exemple, une feuille d'aluminium, de préférence ayant une épaisseur d'environ 10 µm à 30 µm. Le collecteur de courant peut aussi inclure une couche de revêtement de carbone, et ce, afin de promouvoir l'adhésion du collecteur de courant au carbone conducteur présent dans le composite de l'électrode positive.

### Électrode négative:

L'électrode négative de cette invention comprend du lithium, soit sous forme de feuille de lithium métallique ou d'alliage de lithium contenant au moins 90% de lithium par poids. Selon un aspect préféré, l'électrode négative comprend une feuille de lithium métallique possédant une couche de protection sur sa surface. La feuille de lithium a une épaisseur de 10 µm à 500 µm, de préférence de 20 µm à 200 µm. Un procédé de préparation d'un film de lithium peut être retrouvé dans le brevet américain No. 5,528,920 (Bouchard et al.), le contenu duquel est incorporé ici par référence dans son intégralité.

La couche de protection est formée par revêtement d'un matériau lubrifiant sur la surface fraiche d'une feuille de lithium avant la formation d'oxyde natif. Le lubrifiant peut être choisi parmi les huiles synthétiques, de préférence parmi les produits d'estérification d'acides gras et de PEG (polyéthylène glycol). Des exemples de lubrifiants et d'additifs pour utilisation dans la préparation de films de lithium peuvent être retrouvés dans le brevet américain No. 6,517,590 (Gauthier et al.), le contenu duquel est incorporé ici par référence dans son intégralité.

### Méthodes de fabrication:

Un procédé de fabrication de la cellule électrochimique de l'invention comprend les étapes suivantes: (a) se procurer un film d'électrode positive, un film d'électrolyte solide, et un film d'électrode négative tels que décrits dans le présent document, et (b) empiler et laminer ensemble le film d'électrode positive, le film d'électrolyte solide, et le film d'électrode négative.

Selon un aspect, l'étape de procuration du film d'électrode négative inclut une étape de laminage d'une feuille de lithium et revêtement de sa surface par une couche protectrice.

Selon un autre aspect, l'étape de procuration du film d'électrode positive inclut les étapes de mélange du matériau électrochimiquement actif de l'électrode positive avec un carbone conducteur, des précurseurs de polymère, optionnellement des sel(s) de lithium, composé(s) inorganique(s) et/ou solvant(s), épandage du mélange obtenu sur un collecteur de courant, évaporation du solvant (si nécessaire) et polymérisation, par irradiation UV ou chauffage, pour l'obtention du film d'électrode positive.

Selon un autre aspect, l'étape de procuration du film d'électrolyte solide inclut les étapes de mélange de précurseurs de polymère(s), sel(s) de lithium, composé(s) inorganique(s), et optionnellement de solvant(s), afin d'ajuster la viscosité, coulage du mélange obtenu sur un substrat, évaporation du solvant (si nécessaire) et polymérisation, par irradiation UV ou chauffage, pour l'obtention du film d'électrolyte solide.

Alternativement, l'étape de procuration du film d'électrolyte solide inclut les étapes de (a) mélange de précurseurs de polymère(s), sel(s) de lithium, composé(s) inorganique(s), et optionnellement de solvant(s), afin d'ajuster la viscosité, coulage du mélange obtenu sur un substrat, évaporation du solvant (si nécessaire) et polymérisation, par irradiation UV ou chauffage, pour l'obtention d'un film polymère-composé inorganique; et (b) mélange de précurseurs de polymère(s), sel(s) de lithium, et optionnellement de solvant(s), afin d'ajuster la viscosité, coulage du mélange obtenu sur le film polymère-composé inorganique, évaporation du solvant (si nécessaire) et polymérisation, par irradiation UV ou chauffage, pour former le film d'électrolyte solide.

Selon un autre aspect, l'étape d'empilage et laminage des films d'électrode positive, électrolyte solide, et électrode négative inclut les étapes de laminage du film d'électrode positive avec le film d'électrolyte solide et de laminage subséquent du film d'électrode négative sur ce dernier.

Un procédé de fabrication d'une cellule électrochimique telle qu'illustrée à la Figure 2(a) comprend, par exemple, les étapes suivantes : a) laminage d'une feuille de lithium et revêtement optionnel de la surface avec une couche de protection telle que décrite ci-haut; b) mélange du matériau électrochimiquement actif de l'électrode positive avec du carbone conducteur, des précurseurs de polymère, et optionnellement des sel(s) de lithium, composé(s) inorganique(s) et/ou solvant(s); c) épandage du mélange obtenu à l'étape (b) sur un collecteur de courant, évaporation du solvant (si nécessaire) et polymérisation par irradiation UV ou chauffage pour former un film d'électrode positive; d) mélange de précurseurs de polymère, sel(s) de lithium, composé(s) inorganique(s), et optionnellement de solvant(s) pour ajuster la viscosité; e) coulage du mélange obtenu à l'étape (d) sur un substrat, évaporation du solvant (si nécessaire) et polymérisation, par irradiation UV ou chauffage, pour former un film d'électrolyte solide; f) empilage et laminage du film d'électrode positive obtenu à l'étape (c), du film d'électrolyte solide obtenu en (e), et du film d'électrode négative de l'étape (a), où les films d'électrodes négative et positive sont chacun en contact avec une surface opposée du film d'électrolyte solide. Le procédé peut aussi inclure une étape de retrait du substrat du film d'électrolyte solide avant l'étape (f).

Selon un autre aspect, le procédé de fabrication de la cellule électrochimique de l'invention comprend les étapes suivantes : a) laminage d'une feuille de lithium et revêtement optionnel de la surface avec une couche de protection telle que décrite ci-haut; b) mélange du matériau électrochimiquement actif de l'électrode positive avec du carbone conducteur, des précurseurs de polymère, et optionnellement des sel(s) de lithium, composé(s) inorganique(s) et/ou solvant(s); c) épandage du mélange obtenu à l'étape (b) sur un collecteur de courant et évaporation du solvant (si nécessaire) pour former un précurseur de film d'électrode positive; d) mélange de précurseurs de polymère, sel(s) de lithium, composé(s) inorganique(s), et optionnellement de solvant(s) pour ajuster la viscosité; e) coulage du mélange obtenu à l'étape (d) sur le précurseur de film d'électrode positive de l'étape (c), évaporation du solvant (si nécessaire) et polymérisation, par irradiation UV ou chauffage, pour former un film électrode positive/électrolyte solide; f) empilage et laminage du film électrode positive/électrolyte solide obtenu à l'étape (e), avec le film d'électrode négative de l'étape (a), où les films d'électrodes négative et positive sont respectivement en contact avec une surface opposée du film d'électrolyte solide.

Un procédé de fabrication d'une cellule électrochimique telle qu'illustrée à la Figure 2(b) comprend les étapes suivantes : a) laminage d'une feuille de lithium et revêtement optionnel de la surface avec une couche de protection telle que décrite ci-haut; b) mélange du matériau électrochimiquement actif de l'électrode positive avec du carbone conducteur, des précurseurs de polymère, et optionnellement des sel(s) de lithium, composé(s) inorganique(s) et/ou solvant(s); c) épandage du mélange obtenu à l'étape (b) sur un collecteur de courant, évaporation du solvant (si nécessaire) et polymérisation par irradiation UV ou chauffage pour former un film d'électrode positive; d) mélange de précurseurs de polymère, sel(s) de lithium, et optionnellement de solvant(s) pour ajuster la viscosité; e) coulage du mélange obtenu à l'étape (d) sur un substrat, évaporation du solvant (si nécessaire) et polymérisation, par irradiation UV ou chauffage, pour former un premier film d'électrolyte solide; f) mélange de précurseurs de polymère, sel(s) de lithium, composé(s) inorganique(s), et optionnellement de solvant(s) pour ajuster la viscosité; g) coulage du mélange obtenu à l'étape (f) sur un substrat, évaporation du solvant (si nécessaire) et polymérisation, par irradiation UV ou chauffage, pour former un deuxième film d'électrolyte solide; h) empilage et laminage du film d'électrode positive obtenu à l'étape (c), du premier film d'électrolyte solide obtenu en (e), du deuxième film d'électrolyte solide obtenu en (g), et du film d'électrode négative de l'étape (a), où les films d'électrodes positive et négative font face respectivement au premier film d'électrolyte solide et au deuxième film d'électrolyte solide. Le procédé peut aussi inclure une étape de retrait du ou des substrat(s) du ou des film(s) d'électrolyte solide avant l'étape (h).

Selon un autre aspect, le procédé de fabrication de la cellule électrochimique de l'invention comprend les étapes suivantes : a) laminage d'une feuille de lithium et revêtement optionnel de la surface avec une couche de protection telle que décrite ci-haut; b) mélange du matériau électrochimiquement actif de l'électrode positive avec du carbone conducteur, des précurseurs de polymère, et optionnellement des sel(s) de lithium, composé(s) inorganique(s) et/ou solvant(s); c) épandage du mélange obtenu à l'étape (b) sur un collecteur de courant et évaporation du solvant (si nécessaire) pour former un précurseur de film d'électrode positive; d) mélange de précurseurs de polymère, sel(s) de lithium, et optionnellement de solvant(s) pour ajuster la viscosité; e) coulage du mélange obtenu à l'étape (d) sur le précurseur de film d'électrode positive obtenu en (c), évaporation du solvant (si nécessaire) et polymérisation, par irradiation UV ou chauffage, pour former un film « électrode positive/premier film d'électrolyte solide »; f) mélange de précurseurs de polymère, sel(s) de lithium, composé(s) inorganique(s) et optionnellement de solvant(s) pour ajuster la viscosité; g) coulage du mélange obtenu à l'étape (f) sur un substrat, évaporation du solvant (si nécessaire) et polymérisation, par irradiation UV ou chauffage, pour former un deuxième film d'électrolyte solide; h) empilage et laminage du film « électrode positive/premier film d'électrolyte solide » obtenu à l'étape (e), du deuxième film d'électrolyte solide obtenu en (g) et du film d'électrode négative obtenu à l'étape (a), où le deuxième film d'électrolyte solide fait face à la surface libre du premier film d'électrolyte solide, à l'opposé du film d'électrode positive, le film d'électrode négative faisant face au deuxième film d'électrolyte solide du côté opposé du premier film d'électrolyte solide. Le procédé peut aussi inclure une étape de retrait du substrat du deuxième film d'électrolyte solide avant l'étape (h).

Selon un autre aspect, le procédé de fabrication de la cellule électrochimique de l'invention comprend les étapes suivantes : a) laminage d'une feuille de lithium et revêtement optionnel de la surface avec une couche de protection telle que décrite ci-haut; b) mélange du matériau électrochimiquement actif de l'électrode positive avec du carbone conducteur, des précurseurs de polymère, et optionnellement des sel(s) de lithium, composé(s) inorganique(s) et/ou solvant(s); c) épandage du mélange obtenu à l'étape (b) sur un collecteur de courant et évaporation du solvant (si nécessaire) pour former un précurseur de film d'électrode positive; d) mélange de précurseurs de polymère, sel(s) de lithium, et optionnellement de solvant(s) pour ajuster la viscosité; e) coulage du mélange obtenu à l'étape (d) sur le précurseur de film d'électrode positive de l'étape (c), évaporation du solvant (si nécessaire); f) mélange de précurseurs de polymère, sel de lithium, composés inorganiques et optionnellement un solvant pour ajuster la viscosité; g) coulage du mélange obtenu à l'étape (f) sur la surface « électrolyte » du film obtenu à l'étape (e), évaporation du solvant (si nécessaire) et polymérisation par irradiation UV ou chauffage pour former un film électrode positive/électrolyte solide où le film d'électrolyte solide comprend deux couches; h) empilage et laminage du film électrode positive/électrolyte solide obtenu à l'étape (g), et du film d'électrode négative de l'étape (a), où les films d'électrode négative et positive sont chacun en contact avec une surface opposée du film d'électrolyte solide.

Un procédé de fabrication d'une cellule électrochimique telle qu'illustrée à la Figure 2(c) est réalisé de manière similaire à ce qui précède, comprenant en outre, une étape de préparation et d'ajout d'une couche inorganique entre le film d'électrolyte solide et le film d'électrode négative. Par exemple, la couche inorganique est préparée par pressage de poudres inorganiques pour former une pastille ou une feuille et par chauffage à une température de 500°C - 1000°C. La pastille ou feuil le de poudre inorganique a, de préférence, une épaisseur d'environ 10 µm à environ 1000 µm, de préférence entre 50 - 500 µm. La couche inorganique peut aussi être déposée par pulvérisation cathodique.

### EXEMPLES

### Exemple 1 (Comparatif):

### a) Préparation du film d'électrode positive

Un homo-polymère poly(oxyde d'éthylène) (PEO) (Poids moléculaire: 5,000,000) a été dissout dans un mélange d'acétonitrile et de toluène (rapport en volume de 8:2) à une concentration de 10 % par poids, pour obtenir une solution de PEO. De la poudre de soufre (3.00g), du noir Ketjen™ (1.00g), et la solution de PEO (4.49g) ont été mélangés à l'aide d'un mélangeur planétaire centrifuge (Thinky Mixer ARE-250™). Une portion de solvant additionnelle (acétonitrile + toluène à 8:2 de rapport de volume) a été ajouté au mélange afin d'atteindre une viscosité de ∼10,000 cP, appropriée pour l'enduction. Le mélange ainsi obtenu a été enduit sur une feuille d'aluminium enduite de carbone à l'aide d'un racloir (Doctor Blade) ayant un espacement de 100 µm.

### b) Assemblage de la pile

Des piles boutons de type CR2032 ont été assemblées dans une boîte à gants remplie d'hélium à l'aide d'un séparateur Celgard 3501™ et une anode de feuille de lithium (Hoshen, 200 µm). Ensuite, 0.12 ml de bis(trifluorométhanesulfonyl)imide de lithium (LiTFSI) 1 M dans un mélange d'éther diméthylique d'éthylene glycol (DME) et de 1,3-dioxolane (DOX) (rapport en volume de 1:1) a été injecté dans la pile. Les courbes de première charge (0.1C) et décharge (0.1C) de l'Exemple 1 (comparatif) sont démontrées à la Figure 5.

### Exemple 2:

### a) Préparation du matériau composite de soufre

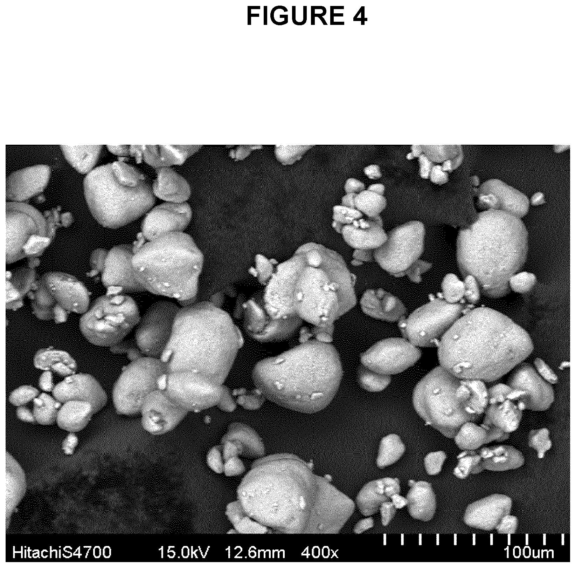

Du soufre en poudre pré-séché (20g) et du LiFePO₄ enrobé de carbone (C-LiFePO₄, moyenne de 100 nm, 5g) ont été traités dans un mélangeur à poudre Nobilta™ (NOB-MINI™, Hosokawa Micron Corp.) à 5000 rpm pendant 5 minutes. L'image SEM du composite de soufre ainsi obtenu est présentée à la Figure 4.

### b) Préparation du film d'électrode positive

Un polymère réticulable de poly(oxyde d'éthylène) a été dissout dans un mélange d'acétonitrile et de toluène (8:2 de rapport en volume) à une concentration de 28.75 % par poids ("solution polymère" ci-après). Le composite de soufre (9.79 g) de l'étape (a), du noir Ketjen™ (4.88 g), la solution polymère (17.0 g), et des solvants (acétonitrile:toluène, 8:2 rapport de volume; 99.2 g) ont été broyés pendant 24 heures dans un récipient d'alumine rempli de billes d'alumine. Du LiClO₄ (0.44 g) et du 2,2-diméthoxy-1,2-diphényléthan-1-one (0.06 g) ont ensuite été ajoutés et le mélange broyé de nouveau pendant 30 minutes. Le mélange obtenu a ensuite été enduit, à l'aide d'un racloir, sur une feuille d'aluminium enduite de carbone. Après séchage du solvant à 60°C pendant 10 minutes, le film a été irradié pendant 2 minutes avec une lumière UV sous atmosphère d'azote.

### c) Préparation du film d'électrolyte polymère solide

De la silice (4.46 g) a été ajoutée à la solution polymère (94.57 g) et a été broyée dans un broyeur à billes pendant 24 heures. Ensuite, du LiClO₄ (5.05 g) et du 2,2-diméthoxy-1,2-diphényléthan-1-one (0.12 g) ont été ajoutés à la solution et le mélange broyé de nouveau pendant 30 minutes. Afin de préparer un film, la solution a été coulée sur un substrat de polypropylène et, après élimination du solvant à 60°C pendant 10 minutes, le film a été irradié pendant 2 minutes avec une lumière UV sous atmosphère d'azote. Après séchage, l'épaisseur du film a été mesurée comme étant de 25 µm.

Comme méthode alternative, la solution a été coulée sur le film d'électrode positive et le polymère a été réticulé dans les mêmes conditions.

### d) Assemblage de la pile

La pile a été assemblée par empilage et laminage des 3 films: électrode positive, électrolyte polymère solide et feuille de lithium (40µm) sous une pression de 30 psi à 80°C. Après connexion des terminaux aux électrodes, la pile a été scellée dans un sac en plastique étanche à l'air. La performance de la pile de cet exemple est démontrée à la Figure 5.

### Exemple 3:

### a) Préparation du film d'électrode positive

Le matériau composite de soufre de l'Exemple 2(a) (2.438 g), du noir de carbone (0.993 g, Super P® de Timcal Graphite et Carbon), la solution polymère de l'Exemple 2(b) (4.391 g), et des solvants (acétonitrile:toluène, 8:2 en rapport de volume; 26.08 g) ont été mélangés à l'aide d'un mélangeur planétaire centrifuge (Thinky Mixer ARE-250™). Du LiTFSI (0.298 g) et du 2,2-diméthoxy-1,2-diphényléthan-1-one (0.015 g) ont ensuite été ajoutés et le mélange a été mélangé pendant 4 minutes. Le mélange obtenu a été enduit, à l'aide d'un racloir, sur une feuille d'aluminium enduite de carbone. Après séchage du solvant à 60°C pendant 10 minutes, le film a été irradié pendant 2 minutes avec une lumière UV sous atmosphère d'azote.

### b) Préparation du film d'électrolyte polymère solide

Du SiO₂ (0.799 g) a été ajouté à la solution polymère (20.00 g) et a été broyé dans un broyeur à billes pendant 24 heures. Ensuite, du LiTFSI (1.205 g) et du 2,2-diméthoxy-1,2-diphényléthan-1-one (0.022 g) ont été ajoutés à la solution et ont été mélangés à l'aide d'un mélangeur planétaire centrifuge pendant 2 min. Afin de préparer un film, la solution a été coulée sur un substrat de polypropylène et, après élimination du solvant à 60°C pendant 10 minutes, film a été irradié pendant 2 minutes avec une lumière UV sous atmosphère d'azote. L'épaisseur du film a été mesurée comme étant de 25 µm après séchage.

Comme méthode alternative, la solution a été coulée sur le film d'électrode positive et le polymère a été réticulé dans les mêmes conditions.

### c) Assemblage de la pile

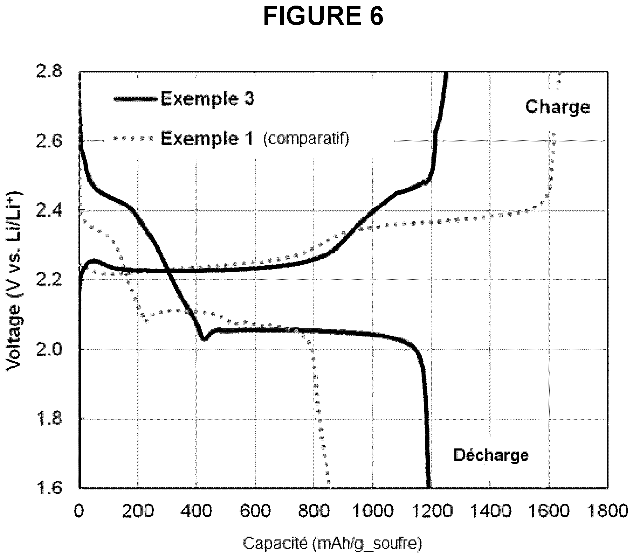

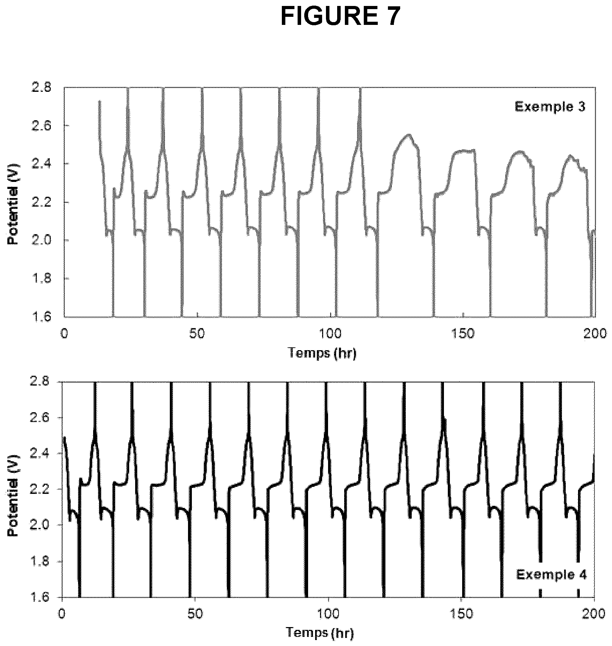

La pile a été assemblée par empilage et laminage des 3 films: électrode positive, électrolyte polymère solide et feuille de lithium (40µm) à 80°C. Après connexion des terminaux aux électrodes, la pile a été scellée dans un emballage étanche à l'air. Les courbes de troisième charge (0.1C) et décharge (0.1C) sont démontrées à la Figure 6 en comparaison de celles de la pile de l'Exemple 1. Le comportement aux cycles consécutifs est présenté à la Figure 7.

### Exemple 4:

### a) Préparation du film d'électrode positive

Le composite de soufre de l'Exemple 2(a) (2.529 g), du Super P® (1.01 g), SiO₂ (0.165 g), la solution polymère (3.969 g), et les solvants (acétonitrile:toluène, 8:2 en rapport de volume; 28.04 g) ont été mélangés à l'aide d'un mélangeur planétaire centrifuge. Du LiTFSI (0.244 g) et du 2,2-diméthoxy-1,2-diphényléthan-1-one (0.016 g) ont ensuite été ajoutés et le mélange a été mélangé pendant 4 minutes. Le mélange obtenu a été enduit, à l'aide d'un racloir, sur une feuille d'aluminium enduite de carbone. Après séchage du solvant à 60°C pendant 10 minutes, le film a été irradié pendant 2 minutes avec une lumière UV sous atmosphère d'azote.

### b) Préparation du film d'électrolyte solide polymère

Du SiO₂ (0.799 g) a été ajouté à la solution polymère (20.00 g) et broyé dans un broyeur à billes pendant 24 heures. Ensuite, du LiTFSI (1.205 g) et du 2,2-diméthoxy-1,2-diphényléthan-1-one (0.022 g) ont été ajoutés à la solution et ont été mélangés à l'aide d'un mélangeur planétaire centrifuge pendant 2 min. Afin de préparer un film, la solution a été coulée sur un substrat de polypropylène et, après élimination du solvant à 60°C pendant 10 minutes, le film a été irradié pendant 2 minutes avec une lumière UV sous atmosphère d'azote. L'épaisseur du film a été mesurée comme étant de 25 µm après séchage.

Comme méthode alternative, la solution a été coulée sur le film d'électrode positive et le polymère a été réticulé dans les mêmes conditions.

### c) Préparation du film d'électrode négative

Une solution de lubrifiant est préparée par la dissolution du distéarate de PEO200 (6.6 g, poid moléculaire de l'unité PEO: approximativement 200) dans du toluène (100 mL) et l'ajout d'hexane (900 mL). Un feuille de lithium d'une épaisseur de 300 µm est laminée entre deux rouleaux pour former un film de lithium d'une épaisseur de 30 µm tout en injectant la solution de lubrifiant sur la feuille.

### d) Assemblage de la pile

La pile a été assemblée par empilage et laminage des 3 films: électrode positive, électrolyte polymère solide et feuille de lithium à 80°C. Après connexion des terminaux aux électrodes, la pile a été scellée dans un emballage étanche à l'air. La performance de cycle est comparée à celle de l'Exemple 3 à la Figure 7.

### Exemple 5:

Une cellule électrochimique est préparée comme à l'Exemple 4, dans lequel le matériau composite de soufre est préparé en utilisant du TiS₂ au lieu du C-LiFePO₄. Les autres conditions sont les mêmes que pour l'Exemple 4.

### Exemple 6:

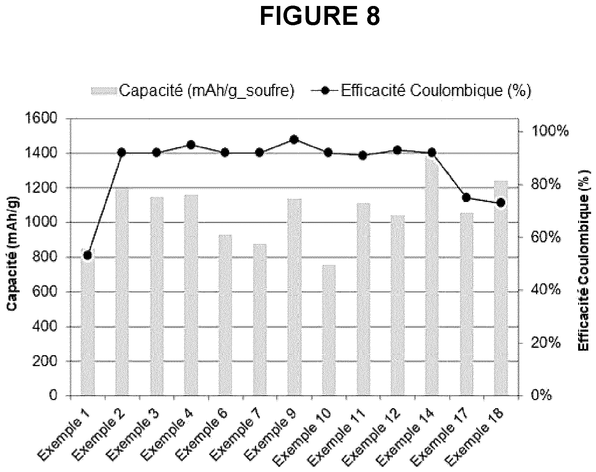

Une cellule électrochimique a été préparée comme à l'Exemple 4, dans lequel le matériau composite de soufre a été préparé en utilisant du TiO₂ au lieu du C-LiFePO₄. Les autres conditions étaient les mêmes que pour l'Exemple 4. La capacité initiale de décharge à 0.1C et son efficacité coulombique sont démontrées à la Figure 8.

### Exemple 7:

Une cellule électrochimique a été préparée comme à l'Exemple 4, dans lequel le matériau composite de soufre a été préparé en utilisant du MoS₂ au lieu du C-LiFePO₄. Les autres conditions étaient les mêmes que pour l'Exemple 4. La capacité initiale de décharge à 0.1C et son efficacité coulombique sont démontrées à la Figure 8.

### Exemple 8:

Une cellule électrochimique est préparée comme à l'Exemple 4, dans lequel le matériau composite de soufre est préparé en utilisant du MoO₂ au lieu du C-LiFePO₄. Les autres conditions sont les mêmes que pour l'Exemple 4.

### Exemple 9:

Une cellule électrochimique a été préparée comme à l'Exemple 4, dans lequel le matériau composite de soufre a été préparé en utilisant du LiV₃O₈ au lieu du C-LiFePO₄. Les autres conditions étaient les mêmes que pour l'Exemple 4. La capacité initiale de décharge à 0.1C et son efficacité coulombique sont démontrées à la Figure 8.

### Exemple 10:

Une cellule électrochimique a été préparée comme à l'Exemple 4, dans lequel le matériau composite de soufre a été préparé en utilisant du V₂O₅ au lieu du C-LiFePO₄. Les autres conditions étaient les mêmes que pour l'Exemple 4. La capacité initiale de décharge à 0.1C et son efficacité coulombique sont démontrées à la Figure 8.

### Exemple 11:

Une cellule électrochimique a été préparée comme à l'Exemple 4, dans lequel le matériau composite de soufre a été préparé en utilisant du Li₄Ti₅O₁₂ au lieu du C-LiFePO₄. Les autres conditions étaient les mêmes que pour l'Exemple 4. La capacité initiale de décharge à 0.1C et son efficacité coulombique sont démontrées à la Figure 8.

### Exemple 12:

Une cellule électrochimique a été préparée comme à l'Exemple 4, dans lequel le matériau composite de soufre a été préparé en utilisant du SiO₂ au lieu du C-LiFePO₄. Les autres conditions étaient les mêmes que pour l'Exemple 4. La capacité initiale de décharge à 0.1C et son efficacité coulombique sont démontrées à la Figure 8.

### Exemple 13:

Une cellule électrochimique est préparée comme à l'Exemple 4, dans lequel le matériau composite de soufre est préparé en utilisant du Al₂O₃ au lieu du C-LiFePO₄. Les autres conditions sont les mêmes que pour l'Exemple 4.

### Exemple 14:

Une cellule électrochimique a été préparée comme à l'Exemple 4, dans lequel l'électrolyte solide a été préparé par empilage d'un film de verre OHARA (épaisseur de 150 µm) et du film d'électrolyte polymère solide de l'Exemple 4 pour l'obtention d'une structure telle que montrée à la Figure 2(c). Les autres conditions étaient les mêmes que pour l'Exemple 4. La capacité de décharge à 0.02C et son efficacité coulombique sont démontrées à la Figure 8.

### Exemple 15:

Une cellule électrochimique est préparée comme à l'Exemple 4, dans lequel l'électrolyte solide est préparé en utilisant du Li₆La₃ZrTaO₁₂ au lieu du SiO₂. Les autres conditions sont les mêmes que pour l'Exemple 4.

### Exemple 16:

Une cellule électrochimique est préparée comme à l'Exemple 4, dans lequel l'électrolyte solide est préparé en utilisant du Al₂O₃ au lieu du SiO₂. Les autres conditions sont les mêmes que pour l'Exemple 4.

### Exemple 17:

Une cellule électrochimique a été préparée comme à l'Exemple 4, dans lequel l'électrolyte solide a été préparé en utilisant du TiO₂ au lieu du SiO₂. Les autres conditions étaient les mêmes que pour l'Exemple 4. La capacité de décharge à 0.1C et son efficacité coulombique sont démontrées à la Figure 8.

### Exemple 18 (Comparatif):

Une cellule électrochimique a été préparée comme à l'Exemple 4, dans lequel du soufre pur en poudre (Pristine) a été utilisé au lieu du matériau composite de soufre de l'Exemple 4. Les autres conditions étaient les mêmes que pour l'Exemple 4. La capacité de décharge à 0.1C et son efficacité coulombique sont démontrées à la Figure 8.

## Revendications

1. Une cellule électrochimique comprenant au moins un composant multicouche qui comprend :
- un film d'électrode positive comprenant, sur un collecteur de courant, des particules de soufre élémentaire en tant que matériau électrochimiquement actif, un carbone conducteur, et un liant polymère, lesdites particules de soufre élémentaire étant encapsulées dans un matériau d'enrobage;
- un film d'électrode négative comprenant du lithium comme matériau électrochimiquement actif; et
- un film d'électrolyte solide entre les films d'électrodes négative et positive, ledit film d'électrolyte solide comprenant au moins un sel de lithium et au moins une couche polymérique, ledit film d'électrolyte solide étant un film conducteur d'ion et comprenant au moins un composé inorganique dans la couche polymérique ou dans une couche solide séparée et conductrice d'ions, le polymère de l'électrolyte consiste en un copolymère séquencé composé d'au moins un segment de solvatation d'ions lithium et au moins un segment réticulable, ledit segment réticulable du polymère étant un segment de polymère comprenant au moins un groupement fonctionnel réticulable de façon multidimensionnelle par irradiation ou traitement thermique, et le segment de solvatation d'ions lithium est choisi parmi les homo- ou copolymères ayant des unités répétitives de Formule (I) : 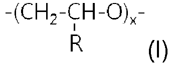 dans laquelle,
R est choisi parmi H, C₁-C₁₀alkyl, ou -(CH₂-O-R^{a}R^{b});
R^{a} est (CH₂-CH₂-O)_{y};
R^{b} est choisi parmi H et un groupement C₁-C₁₀alkyl;
x est un nombre entier choisi dans l'intervalle de 10 à 200,000; et
y est un nombre choisi dans l'intervalle de 0 à 10.

2. Cellule électrochimique selon la revendication 1, dans laquelle le composé inorganique du film d'électrolyte solide est choisi parmi SiO₂, Al₂O₃, TiO₂, les céramiques ou verres conducteurs d'ions lithium, d'autres solides conducteurs d'ions lithium, et leurs combinaisons.

3. Cellule électrochimique selon la revendication 2, dans laquelle les céramiques ou verres conducteurs d'ions lithium sont choisi parmi NASICON, LISICON, thio-LISICON, Garnet, de forme cristalline ou amorphe, et leurs combinaisons.

4. Cellule électrochimique selon l'une quelconque des revendications 1 à 3, dans laquelle le film d'électrolyte solide a une épaisseur entre 10 et 200 µm, entre 10 et 100 µm, ou entre 20 et 50 µm.

5. Cellule électrochimique selon l'une quelconque des revendications 1 à 4, dans laquelle le liant polymère est un copolymère séquencé composé d'au moins un segment de solvatation d'ions lithium et au moins un segment réticulable.

6. Cellule électrochimique selon la revendication 5, dans laquelle le segment de solvatation d'ions lithium est choisi parmi les homo- ou copolymères ayant des unités répétitives de Formule (I) telle que définie à la revendication 1.

7. Cellule électrochimique selon l'une quelconque des revendications 1 à 6, dans laquelle le matériau d'enrobage comprend un matériau inorganique choisi parmi:
- LiₐM¹_{b}(XO₄), dans lequel 0 ≤a ≤ 2, 0< b ≤ 1; M¹ est choisi parmi Fe, Mn, Co, Ni, et Ti, ou leurs combinaisons, et X est choisi parmi P, Si et S; et
- Li_{c}M²_{d}Zₑ, dans lequel 0 ≤ c ≤ 4, 0 < d ≤ 5, 0 < e ≤ 12; M² est choisi parmi Mo, V, Ti, Al, et Si; et Z est choisi parmi O, S, et Se;
ledit matériau inorganique étant sous forme de particules, éventuellement enrobées de carbone.

8. Cellule électrochimique selon la revendication 7, dans laquelle le matériau inorganique est choisi parmi LiFePO₄, LiNiPO₄, LiMnPO₄, LiCoPO₄, et LiFe₁₋ₓTiₓPO₄, où 0 < x < 1.

9. Cellule électrochimique selon la revendication 7, dans laquelle le matériau inorganique est choisi parmi TiO₂, TiS2, V₂O₅, LiV₃O₈, Li₄Ti₅O₁₂, MoS₂, MoO₂, SiO₂, et Al₂O₃.

10. Cellule électrochimique selon l'une quelconque des revendications 1 à 9, dans laquelle les particules de soufre élémentaire encapsulées dans un matériau d'enrobage forment un matériau composite préparé par mécanofusion.

11. Cellule électrochimique selon l'une quelconque des revendications 1 à 10, dans laquelle le carbone conducteur est une poudre ou fibre de carbone choisi parmi le noir de carbone, le charbon activé, le graphite, le graphène, et leurs mélanges.

12. Cellule électrochimique selon la revendication 11, dans laquelle le carbone conducteur possède une surface spécifique d'au moins 5 m²/g, au moins 50 m²/g, ou au moins 500 m²/g.

13. Cellule électrochimique selon l'une quelconque des revendications 1 à 12, dans laquelle le matériau électrochimiquement actif du film d'électrode négative comprend une feuille de lithium métallique ou un alliage de lithium métallique comprenant au moins 90% en poids de lithium.

14. Cellule électrochimique selon l'une quelconque des revendications 1 à 13, dans laquelle une surface du matériau électrochimiquement actif du film d'électrode négative inclut en outre une couche de passivation formée *in situ.*

15. Une méthode de fabrication d'une cellule électrochimique telle que définie dans l'une quelconque des revendications 1 à 14, comprenant les étapes suivantes:
a) mise à disposition du film d'électrode positive, du film d'électrolyte solide, et du film d'électrode négative; et
b) empilage et laminage ensemble du film d'électrode positive, d'électrolyte, et d'électrode négative entre au moins deux rouleaux;
dans laquelle l'étape de mise à disposition du film d'électrode positive comprend les étapes de mélange du matériau électrochimiquement actif de l'électrode positive avec un carbone conducteur, des précurseurs de polymères, éventuellement des sel(s) de lithium, composé(s) inorganique(s) et/ou solvant(s), épandage du mélange obtenu sur un collecteur de courant, évaporation du solvant (si présent) et polymérisation, par irradiation UV ou traitement thermique, pour former le film d'électrode positive.

16. Méthode selon la revendication 15, dans laquelle l'étape de mise à disposition du film d'électrolyte comprend les étapes de mélange de précurseurs de polymère, de sel(s) de lithium, éventuellement de composé(s) inorganique(s) et/ou de solvant(s), afin d'ajuster la viscosité, coulage du mélange ainsi obtenu sur un substrat, évaporation du solvant (si présent) et polymérisation, par irradiation UV ou traitement thermique, pour former le film d'électrolyte solide.

17. Méthode selon la revendication 15, dans laquelle l'étape de mise à disposition du film d'électrolyte comprend les étapes de (i) mélange de précurseurs de polymère, de sel(s) de lithium, de composé(s) inorganique(s), et éventuellement de solvant(s), afin d'ajuster la viscosité, coulage du mélange ainsi obtenu sur un substrat, évaporation du solvant (si présent) et polymérisation, par irradiation UV ou traitement thermique, pour former le film d'électrolyte solide, obtenant ainsi un film polymère-composé inorganique; et (ii) mélange de précurseurs de polymère, de sel(s) de lithium, et éventuellement de solvant(s), afin d'ajuster la viscosité, coulage du mélange ainsi obtenu sur le film polymère-composé inorganique, évaporation du solvant (si nécessaire) et polymérisation, par irradiation UV ou traitement thermique, pour former le film d'électrolyte solide.

18. Méthode selon l'une quelconque des revendications 15 à 17, dans laquelle l'étape (b) comprend le laminage du film d'électrode positive avec le film d'électrolyte solide et de laminage subséquent du film d'électrode négative sur celui-ci.

19. Un élément électrolyte-électrode positive préfabriqué comprenant:
- un film d'électrode positive comprenant, sur un collecteur de courant, un matériau contenant des particules de soufre élémentaire comme matériau électrochimiquement actif, un liant polymère et un carbone conducteur, lesdites particules de soufre élémentaire étant encapsulées dans un matériau d'enrobage; et
- un film d'électrolyte solide comprenant au moins un sel de lithium et au moins une couche polymérique, ledit film d'électrolyte solide étant un film conducteur d'ion et comprenant au moins un composé inorganique dans la couche polymérique ou dans une couche solide séparée et conductrice d'ions, le polymère de l'électrolyte consiste en un copolymère séquencé composé d'au moins un segment de solvatation d'ions lithium et au moins un segment réticulable, ledit segment réticulable du polymère étant un segment de polymère comprenant au moins un groupement fonctionnel réticulable de façon multidimensionnelle par irradiation ou traitement thermique, et le segment de solvatation d'ions lithium est choisi parmi les homo- ou copolymères ayant des unités répétitives de Formule (I) : 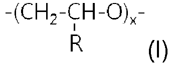 dans laquelle,
R est choisi parmi H, C₁-C₁₀alkyl, ou -(CH₂-O-R^{a}R^{b});
R^{a} est (CH₂-CH₂-O)_{y};
R^{b} est choisi parmi H et un groupement C₁-C₁₀alkyl;
x est un nombre entier choisi dans l'intervalle de 10 à 200,000; et
y est un nombre choisi dans l'intervalle de 0 à 10;
dans lequel les films d'électrode positive et d'électrolyte solide sont empilés ensemble et laminés.

20. Une méthode pour la préparation d'un élément électrolyte-électrode positive préfabriqué tel que défini à la revendication 19, comprenant les étapes de :
a) mélange de soufre avec du carbone conducteur, des précurseurs de polymère, et éventuellement des sel(s) de lithium, composé(s) inorganique(s), et/ou solvant(s);
b) épandage du mélange obtenu à l'étape (a) sur un collecteur de courant, évaporation du solvant (si présent) et polymérisation pour former un film d'électrode positive;
c) mélange de précurseurs de polymère, sel(s) de lithium et de composé(s) inorganique(s) dans un(des) solvant(s) et épandage sur un substrat pour former un précurseur de film d'électrolyte;
d) irradiation ou chauffage du précurseur de film d'électrolyte de l'étape (c) pour former un film d'électrolyte solide; et
e) empilage et laminage du film d'électrode positive de l'étape (b) avec le film d'électrolyte solide de l'étape (d) pour produire l'élément électrolyte-électrode positive préfabriqué.

21. Une méthode pour la préparation d'un élément électrolyte-électrode positive préfabriqué tel que défini à la revendication 19, comprenant les étapes de:
a) mélange de soufre avec du carbone conducteur, des précurseurs de polymère, et éventuellement des sel(s) de lithium, composé(s) inorganique(s), et/ou solvant(s);
b) épandage du mélange obtenu à l'étape (a) sur un collecteur de courant et évaporation du solvant (si présent) pour former un précurseur de film d'électrode positive;
c) mélange de précurseurs de polymère, sel(s) de lithium, composé(s) inorganique(s), et éventuellement de solvant(s) et épandage sur une surface du précurseur de film d'électrode positive de l'étape (b) pour former un précurseur de film d'électrolyte/film d'électrode positive; et
d) irradiation ou chauffage du précurseur de film d'électrolyte/film d'électrode positive obtenu à l'étape (c) pour former l'élément électrolyte-électrode positive préfabriqué.

## Patentansprüche

1. Elektrochemische Zelle, umfassend mindestens eine Mehrschichtkomponente, welche umfasst:
- einen Film einer positiven Elektrode, umfassend, auf einem Stromkollektor, Teilchen von elementarem Schwefel als elektrochemisch aktives Material, einen leitenden Kohlenstoff, und ein Polymerbindemittel, wobei die Teilchen von elementarem Schwefel in einem Beschichtungsmaterial eingekapselt sind;
- einen Film einer negativen Elektrode, der Lithium als elektrochemisch aktives Material umfasst; und
- einen Festelektrolytfilm zwischen dem Film einer negativen Elektrode und dem Film einer positiven Elektrode, wobei der Festelektrolytfilm mindestens ein Lithiumsalz und mindestens eine polymere Schicht umfasst, wobei der Festelektrolytfilm ein ionenleitender Film ist und ferner mindestens eine anorganische Verbindung in der polymeren Schicht oder in einer separaten festen und ionenleitenden Schicht umfasst, wobei das Elektrolytpolymer aus einem Blockcopolymer besteht, das aus mindestens einem Lithiumionen solvatisierenden Segment und mindestens einem vernetzbaren Segment zusammengesetzt ist, wobei das vernetzbare Segment des Polymers ein Polymersegment ist, das mindestens eine funktionelle Gruppe enthält, die durch Bestrahlung oder thermische Behandlung mehrdimensional vernetzbar ist, und das Lithiumionen solvatisierende Segment ausgewählt ist aus Homo- oder Copolymeren mit Wiederholungseinheiten der Formel (I): 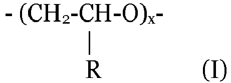 wobei
R aus H, C₁-C₁₀-Alkyl oder -(CH₂-O-R^{a}R^{b}) ausgewählt ist;
R^{a} (CH₂-CH₂-O)_{y} ist;
R^{b} aus H und einer C₁-C₁₀-Alkylgruppe ausgewählt ist;
x eine ganze Zahl ausgewählt aus dem Bereich von 10 bis 200.000 ist;
und y eine Zahl ausgewählt aus dem Bereich von 0 bis 10 ist.

2. Elektrochemische Zelle nach Anspruch 1, wobei die anorganische Verbindung des Festelektrolytfilms aus SiO₂, Al₂O₃, TiO₂, Lithiumionen-leitenden Keramiken oder Gläsern, anderen Lithiumionen-leitenden Feststoffen, und Kombinationen davon ausgewählt ist.

3. Elektrochemische Zelle nach Anspruch 2, wobei die Lithiumionen-leitenden Keramiken oder Gläser aus NASICON, LISICON, Thio-LISICON, Garnet, in kristalliner oder amorpher Form, und Kombinationen davon ausgewählt sind.

4. Elektrochemische Zelle nach irgendeinem der Ansprüche 1 bis 3, wobei der Festelektrolytfilm eine Dicke zwischen 10 und 200 µm, zwischen 10 und 100 µm oder zwischen 20 und 50 µm aufweist.

5. Elektrochemische Zelle nach irgendeinem der Ansprüche 1 bis 4, wobei das polymere Bindemittel ein Blockcopolymer ist, das aus mindestens einem Lithiumionen solvatisierenden Segment und mindestens einem vernetzbaren Segment zusammengesetzt ist.

6. Elektrochemische Zelle nach Anspruch 5, wobei das Lithiumionen solvatisierende Segment aus Homo- oder Copolymeren mit Wiederholungseinheiten der Formel (I) wie in Anspruch 1 definiert ausgewählt ist.

7. Elektrochemische Zelle nach irgendeinem der Ansprüche 1 bis 6, wobei das Beschichtungsmaterial ein anorganisches Material umfasst, das ausgewählt ist aus:
- LiₐM¹_{b}(XO₄), wobei 0 ≤ a ≤ 2, 0 < b ≤ 1; M¹ aus Fe, Mn, Co, Ni und Ti, oder Kombinationen davon ausgewählt ist, und X aus P, Si und S ausgewählt ist; und
- Li_{c}M²_{d}Zₑ, wobei 0 ≤ c ≤ 4, 0 < d ≤ 5, 0 < e ≤ 12; M² aus Mo, V, Ti, Al und Si ausgewählt ist; und Z aus O, S und Se ausgewählt ist;
wobei das anorganische Material in Form von Teilchen vorliegt, die gegebenenfalls mit Kohlenstoff beschichtet sind.

8. Elektrochemische Zelle nach Anspruch 7, wobei das anorganische Material aus LiFePO₄, LiNiPO₄, LiMnPO₄, LiCoPO₄ und LiFe₁₋ₓTiₓPO₄ ausgewählt ist, wobei 0 < X < 1.

9. Elektrochemische Zelle nach Anspruch 7, wobei das anorganische Material aus TiO₂, TiS₂, V₂O₅, LiV₃O₈, Li₄Ti5O₁₂, MoS₂, MoO₂, SiO₂ und Al₂O₃ ausgewählt ist.

10. Elektrochemische Zelle nach irgendeinem der Ansprüche 1 bis 9, wobei die in einem Beschichtungsmaterial eingekapselten Teilchen von elementarem Schwefel ein Verbundmaterial bilden, das durch Mechanofusion hergestellt ist.

11. Elektrochemische Zelle nach irgendeinem der Ansprüche 1 bis 10, wobei der leitende Kohlenstoff ein Kohlenstoffpulver oder eine Kohlenstoffaser, ausgewählt aus Ruß, Aktivkohle, Graphit, Graphen, und Gemischen davon, ist.

12. Elektrochemische Zelle nach Anspruch 11, wobei der leitende Kohlenstoff eine spezifische Oberfläche von mindestens 5 m²/g, mindestens 50 m²/g oder mindestens 500 m²/g aufweist.

13. Elektrochemische Zelle nach irgendeinem der Ansprüche 1 bis 12, wobei das elektrochemisch aktive Material des Films einer negativen Elektrode einen Film bzw. eine Folie von metallischem Lithium oder einer Lithiummetalllegierung umfasst, die mindestens 90 Gewichts-% Lithium umfasst.

14. Elektrochemische Zelle nach irgendeinem der Ansprüche 1 bis 13, wobei eine Oberfläche des elektrochemisch aktiven Materials des Films einer negativen Elektrode ferner eine *in situ*-gebildete Passivierungsschicht einschließt.

15. Verfahren zur Herstellung einer elektrochemischen Zelle wie in irgendeinem der Ansprüche 1 bis 14 definiert, umfassend die folgenden Schritte:
a) Bereitstellen des Films einer positiven Elektrode, des Festelektrolytfilms und des Films einer negativen Elektrode; und
b) zusammen Stapeln und Laminieren des Films einer positiven Elektrode, Elektrolytfilms und Films einer negativen Elektrode zwischen mindestens zwei Walzen;
wobei der Schritt des Bereitstellens des Films einer positiven Elektrode die Schritte des Mischens des elektrochemisch aktiven Materials der positiven Elektrode zusammen mit einem leitenden Kohlenstoff, Polymervorläufern, und gegebenenfalls Lithiumsalz(en), anorganischer(n) Verbindung(en) und/oder Lösungsmittel(n), Verteilen bzw. Beschichten des erhaltenen Gemisches auf einem Stromkollektor, Verdampfen des Lösungsmittels (falls vorhanden) und Polymerisieren durch UV-Bestrahlung oder thermische Behandlung, zur Bildung des Films einer positiven Elektrode umfasst.

16. Verfahren nach Anspruch 15, wobei der Schritt des Bereitstellens des Elektrolytfilms die Schritte des Mischens von Polymervorläufern, Lithiumsalz(en), gegebenenfalls anorganischer(n) Verbindung(en) und/oder Lösungsmittel(n) zur Einstellung der Viskosität, Gießen des erhaltenen Gemisches auf ein Substrat, Verdampfen des Lösungsmittels (falls vorhanden) und Polymerisieren durch UV-Bestrahlung oder thermische Behandlung, zur Bildung des Festelektrolytfilms umfasst.

17. Verfahren nach Anspruch 15, wobei der Schritt des Bereitstellens des Elektrolytfilms die folgenden Schritte umfasst: (i) Mischen von Polymervorläufern, Lithiumsalz(en), anorganischer(n) Verbindung(en) und gegebenenfalls Lösungsmittel(n), um die Viskosität einzustellen, Gießen des erhaltenen Gemisches auf ein Substrat, Verdampfen des Lösungsmittels (falls vorhanden) und Polymerisieren durch UV-Bestrahlung oder thermische Behandlung, um den Festelektrolytfilm zu bilden, wodurch eine Folie von Polymer und anorganischer Verbindung erhalten wird; und (ii) Mischen von Polymervorläufern, Lithiumsalz(en) und gegebenenfalls Lösungsmittel(n), um die Viskosität einzustellen, Gießen der erhaltenen Mischung auf die Folie von Polymer und anorganischer Verbindung, Verdampfen des Lösungsmittels (falls erforderlich) und Polymerisieren durch UV-Bestrahlung oder thermische Behandlung, zur Bildung des Festelektrolytfilms.

18. Verfahren nach irgendeinem der Ansprüche 15 bis 17, wobei Schritt (b) das Laminieren des Films einer positiven Elektrode mit dem Festelektrolytfilm und das anschließende Laminieren des Films einer negativen Elektrode darauf umfasst.

19. Vorgefertigtes Element von Elektrolyt und positiver Elektrode, umfassend:
- einen Film einer positiven Elektrode umfassend, auf einem Stromkollektor, ein Material umfassend Teilchen von elementarem Schwefel als elektrochemisch aktives Material, ein Polymerbindemittel und einen leitenden Kohlenstoff, wobei die Teilchen von elementarem Schwefel in einem Beschichtungsmaterial eingekapselt sind; und
- einen Festelektrolytfilm umfassend mindestens ein Lithiumsalz und mindestens eine polymere Schicht, wobei der Festelektrolytfilm ein ionenleitender Film ist und mindestens eine anorganische Verbindung in der polymeren Schicht oder in einer separaten festen und ionenleitenden Schicht umfasst, wobei das Elektrolytpolymer aus einem Blockcopolymer besteht, das aus mindestens einem Lithiumionen solvatisierenden Segment und mindestens einem vernetzbaren Segment zusammengesetzt ist, wobei das vernetzbare Segment des Polymers ein Polymersegment ist, das mindestens eine funktionelle Gruppe enthält, die durch Bestrahlung oder thermische Behandlung mehrdimensional vernetzbar ist, und das Lithiumionen solvatisierende Segment ausgewählt ist aus Homo- oder Copolymeren mit Wiederholungseinheiten der Formel (I): 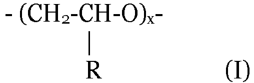 wobei
R aus H, C₁-C₁₀-Alkyl oder -(CH₂-O-R^{a}R^{b}) ausgewählt ist;
R^{a} (CH₂-CH₂-O)_{y} ist;
R^{b} aus H und einer C₁-C₁₀-Alkylgruppe ausgewählt ist;
x eine ganze Zahl ausgewählt aus dem Bereich von 10 bis 200.000 ist; und y eine Zahl ausgewählt aus dem Bereich von 0 bis 10 ist;
wobei die Filme von positiver Elektrode und Festelektrolyt zusammen gestapelt und laminiert sind.

20. Verfahren zur Herstellung eines vorgefertigten Elements von Elektrolyt und positiver Elektrode wie in Anspruch 19 definiert, umfassend die Schritte:
a) Mischen von Schwefel mit leitendem Kohlenstoff, Polymervorläufern und gegebenenfalls Lithiumsalz(en), anorganischer(n) Verbindung(en) und/oder Lösungsmittel(n);
b) Verteilen bzw. Beschichten der in Schritt (a) erhaltenen Mischung auf einem Stromkollektor, Verdampfen des Lösungsmittels (falls vorhanden) und Polymerisieren unter Bildung des Films einer positiven Elektrode;
c) Mischen von Polymervorläufern, Lithiumsalz(en) und anorganischer(n) Verbindung(en) in einem Lösungsmittel oder Lösungsmitteln und Verteilen bzw. Beschichten auf einem Substrat, um einen Elektrolytfilmvorläufer zu bilden;
d) Bestrahlen oder Erwärmen des Elektrolytfilmvorläufers von Schritt (c), um den Festelektrolytfilm zu bilden; und
e) Stapeln und Laminieren des Films einer positiven Elektrode von Schritt (b) mit dem Festelektrolytfilm von Schritt (d), um das vorgefertigte Element von Elektrolyt und positiver Elektrode herzustellen.

21. Verfahren zur Herstellung eines vorgefertigten Elements von Elektrolyt und positiver Elektrode wie in Anspruch 19 definiert, umfassend die Schritte:
a) Mischen von Schwefel mit leitendem Kohlenstoff, Polymervorläufern und gegebenenfalls Lithiumsalz(en), anorganischer(n) Verbindung(en) und/oder Lösungsmittel(n);
b) Verteilen bzw. Beschichten der in Schritt (a) erhaltenen Mischung auf einem Stromkollektor und Verdampfen des Lösungsmittels (falls vorhanden) zur Bildung eines Filmvorläufers einer positiven Elektrode;
c)Mischen von Polymervorläufern, Lithiumsalz(en), anorganischer(n) Verbindung(en) und gegebenenfalls Lösungsmittel(n), und Verteilen bzw. Beschichten auf einer Oberfläche des Filmvorläufers einer positiven Elektrode von Schritt (b), um einen Vorläufer von Elektrolytfilm/Film von positiver Elektrode zu bilden; und
d) Bestrahlen oder Erwärmen des in Schritt (c) erhaltenen Vorläufers von Elektrolytfilm/Film von positiver Elektrode, um das vorgefertigte Element von Elektrolyt und positiver Elektrode zu bilden.

## Claims

1. An electrochemical cell comprising at least one multilayer component which comprises:
- a positive electrode film comprising, on a current collector, elemental sulfur particles as electrochemically active material, a conductive carbon, and a polymer binder, the elemental sulfur particles being encapsulated in a coating material;
- a negative electrode film comprising lithium as an electrochemically active material; and
- a solid electrolyte film between the negative and positive electrode films, said solid electrolyte film comprising at least one lithium salt and at least one polymeric layer, the solid electrolyte film being an ion-conductive film and comprising at least one inorganic compound in the polymeric layer or in a separate ion-conductive solid layer, the electrolyte polymer comprising a block copolymer composed of at least one lithium ion-solvating segment and at least one cross-linkable segment, the cross-linkable segment of the polymer being a polymer segment comprising at least one functional group cross-linkable multidimensionally by irradiation or thermal treatment, and the lithium ion-solvating segment being selected from homo- or copolymers having repeating units of Formula (I): 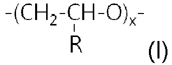 wherein,
R is selected from H, C₁-C₁₀ alkyl, or -(CH₂-O-R^{a}R^{b});
R^{a} is (CH₂-CH₂-O)_{y};
R^{b} is selected from H and a C₁-C₁₀ alkyl group;
x is an integer selected from the range of 10 to 200,000; and
y is a number selected from the range of 0 to 10.

2. The electrochemical cell according to claim 1, wherein the inorganic compound of the solid electrolyte film is selected from SiO₂, Al₂O₃, TiO₂, lithium ion-conductive glasses or ceramics, other lithium ion-conductive solids, and combinations thereof.

3. The electrochemical cell according to claim 2, wherein the lithium ion-conductive glasses or ceramics are selected from NASICON, LISICON, thio-LISICON, Garnet, either in crystalline or amorphous form, and combinations thereof.

4. The electrochemical cell according to any one of claims 1 to 3, wherein the solid electrolyte film has a thickness between 10 and 200 µm, between 10 and 100 µm, or between 20 and 50 µm.

5. The electrochemical cell according to any one of claims 1 to 4, wherein the polymer binder is a block copolymer composed of at least one lithium ion-solvating segment and at least one cross-linkable segment.

6. The electrochemical cell according to claim 5, wherein the lithium ion-solvating segment is selected from homo- or copolymers having repeating units of Formula (I) as defined in claim 1.

7. The electrochemical cell according to any one of claims 1 to 6, wherein the coating material comprises an inorganic material selected from:
- LiₐM¹_{b}(XO₄), wherein 0 ≤ a ≤ 2, 0 < b ≤ 1; M¹ is selected from Fe, Mn, Co, Ni, and Ti, or combinations thereof, and X is selected from P, Si and S; and
- Li_{c}M²_{d}Zₑ, wherein 0 ≤ c ≤ 4, 0 < d ≤ 5, 0 < e ≤ 12; M² is selected from Mo, V, Ti, Al, and Si; and Z is selected from O, S, and Se;
said inorganic material being in the form of particles, optionally coated with carbon.

8. The electrochemical cell according to claim 7, wherein the inorganic material is selected from LiFePO₄, LiNiPO₄, LiMnPO₄, LiCoPO₄, and LiFe₁₋ₓTiₓPO₄, where 0 < x < 1.

9. The electrochemical cell according to claim 7, wherein the inorganic material is selected from TiO₂, TiS₂, V₂O₅, LiV₃O₈, Li₄Ti₅O₁₂, MoS₂, MoO₂, SiO₂, and Al₂O₃.

10. The electrochemical cell according to any one of claims 1 to 9, wherein the elemental sulfur particles encapsulated in a coating material form a composite material prepared by mechanofusion.

11. The electrochemical cell according to any one of claims 1 to 10, wherein the conductive carbon is a carbon powder or fiber selected from carbon black, activated carbon, graphite, graphene, and mixtures thereof.

12. The electrochemical cell according to claim 11, wherein the conductive carbon has a specific surface area of at least 5 m²/g, at least 50 m²/g, or at least 500 m²/g.

13. The electrochemical cell according to any one of claims 1 to 12, wherein the electrochemically active material of the negative electrode film comprises a foil of metallic lithium or lithium metal alloy comprising at least 90% by weight of lithium.

14. The electrochemical cell according to any one of claims 1 to 13, wherein a surface of the electrochemically active material of the negative electrode film further includes a passivation layer formed *in situ.*

15. A method for the manufacturing of an electrochemical cell as defined in any one of claims 1 to 14, comprising the following steps:
a) providing the positive electrode film, the solid electrolyte film, and the negative electrode film; and
b) stacking and laminating together the positive electrode, electrolyte, and negative electrode films between at least two rollers;
wherein the step of providing the positive electrode film comprises the steps of mixing the electrochemically active material of the positive electrode together with a conductive carbon, polymer precursors, and optionally lithium salt(s), inorganic compound(s) and/or solvent(s), coating the mixture obtained on a current collector, evaporating the solvent (if present) and polymerizing by UV irradiation or thermal treatment to form the positive electrode film.

16. The method according to claim 15, wherein the step of providing the electrolyte film comprises the steps of mixing polymer precursors, lithium salt(s), optionally inorganic compound(s) and/or solvent(s) to adjust viscosity, casting the mixture obtained on a substrate, evaporating the solvent (if present) and polymerizing by UV irradiation or thermal treatment to form the solid electrolyte film.

17. The method according to claim 15, wherein the step of providing the electrolyte film comprises the steps of (i) mixing polymer precursors, lithium salt(s), inorganic compound(s), and optionally solvent(s) to adjust the viscosity, casting the mixture obtained on a substrate, evaporating the solvent (if present) and polymerizing by UV irradiation or thermal treatment to form the solid electrolyte film, thus obtaining a polymer-inorganic compound film; and (ii) mixing polymer precursors, lithium salt(s), and optionally solvent(s) to adjust the viscosity, casting the mixture obtained on the polymer-inorganic compound film, evaporating the solvent (if necessary) and polymerizing by UV irradiation or thermal treatment to form the solid electrolyte film.

18. The method according to any one of claims 15 to 17, wherein step (b) comprises laminating the positive electrode film together with the solid electrolyte film and subsequently laminating the negative electrode film thereon.

19. A prefabricated electrolyte-positive electrode element comprising:
- a positive electrode film comprising, on a current collector, a material containing elemental sulfur particles as electrochemically active material, a polymer binder, and a conductive carbon, said elemental sulfur particles being encapsulated in a coating material; and
- a solid electrolyte film comprising at least one lithium salt and at least one polymeric layer, said solid electrolyte film being an ion-conductive film and comprising at least one inorganic compound in the polymeric layer or in a separate ion-conductive solid layer, the electrolyte polymer comprising a block copolymer composed of at least one lithium ion-solvating segment and at least one cross-linkable segment, the cross-linkable segment of the polymer being a polymer segment comprising at least one functional group cross-linkable multidimensionally by irradiation or thermal treatment, and the lithium ion-solvating segment being selected from homo- or copolymers having repeating units of Formula (I): 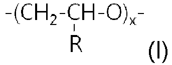 wherein,
R is selected from H, C₁-C₁₀ alkyl, or-(CH₂-O-R^{a}R^{b});
R^{a} is (CH₂-CH₂-O)_{y};
R^{b} is selected from H and a C₁-C₁₀alkyl group;
x is an integer selected from the range of 10 to 200,000; and
y is a number selected from the range of 0 to 10;
wherein the positive electrode and solid electrolyte films are stacked and laminated together.

20. A method for the preparation of a prefabricated electrolyte-positive electrode element as defined in claim 19, comprising the steps of:
a) mixing of sulfur with conductive carbon, polymer precursors, and optionally lithium salt(s), inorganic compound(s), and/or solvent(s);
b) coating the mixture obtained in step (a) on a current collector, evaporating the solvent (if present) and polymerizing to form the positive electrode film;
c) mixing polymer precursors, lithium salt(s) and inorganic compound(s) in a solvent or solvents and coating on a substrate to form an electrolyte film precursor;
d) irradiating or heating the electrolyte film precursor of step (c) to form the solid electrolyte film; and
e) stacking and laminating the positive electrode film of step (b) together with the solid electrolyte film of step (d) to produce the prefabricated electrolyte-positive electrode element.

21. A method for the preparation of a prefabricated electrolyte-positive electrode element as defined in claim 19, comprising the steps of:
a) mixing sulfur with conductive carbon, polymer precursors, and optionally lithium salt(s), inorganic compound(s), and/or solvent(s);
b) coating the mixture obtained in step (a) on a current collector and evaporating the solvent (if present) to form a positive electrode film precursor;
c) mixing polymer precursors, lithium salt(s), inorganic compound(s) and optionally solvent(s), and coating on a surface of the positive electrode film precursor of step (b) to form an electrolyte film/positive electrode film precursor; and
d) irradiating or heating the electrolyte film/positive electrode film precursor obtained in step (c) to form the prefabricated electrolyte-positive electrode element.
